# EUROPÄISCHE PATENTSCHRIFT

(11) **EP 0 803 429 B1**
(45) Veröffentlichungstag und Bekanntmachung des Hinweises auf die Patenterteilung: **10.10.2001**
(21) Anmeldenummer: 97104479.7
(22) Anmeldetag: 15.03.1997
(51) Int. Cl.: B62J 15/00

(54) **Einrichtung zur Befestigung von Streben eines Radschützers eines Fahrrads**
Fixing device for a mudguard of a bicycle
Dispositif de fixation d'un garde-boue de bicyclette

(30) Priorität: 26.04.1996 DE 29607628 U
(43) Veröffentlichungstag der Anmeldung: 29.10.1997
(73) Patentinhaber: sks-metaplast SCHEFFER-KLUTE GMBH, D-59846 Sundern/Sauerland (DE)
(72) Erfinder: Golz, Peter c/o Flöz Industrie Design, D-45131 Essen (DE); Wahl, Oliver c/o Flöz Industrie Design, D-45131 Essen (DE); Arnold, Michael c/o sks metaplast Scheffer-klute, D-59846 Sundern (DE)
(74) Vertreter: Fritz, Edmund Lothar, Dipl.-Chem.

(56) Entgegenhaltungen:
- EP-A- 0 694 469
- DE-A- 4 232 539
- FR-A- 2 443 372
- GB-A- 358 270
- GB-A- 394 052

## Beschreibung

Die vorliegende Erfindung betrifft eine Einrichtung zur Befestigung von Streben zur Halterung eines Radschützers am Rahmen eines Fahrrads, wobei diese wenigstens ein Anschlussteil umfasst, mit wenigstens einer Aufnahme für die Strebe sowie ein Einsteckteil dessen eines Ende am Fahrradrahmen befestigbar ist, wobei das andere Ende des Einsteckteils in eine entsprechend geformte Aufnahme des Anschlussteils einsteckbar und mit diesem über eine Rastverbindung verbindbar ist, wobei die Rastverbindung so ausgebildet ist, dass bei Auftreten einer Zugkraft entgegen der Einsteckrichtung des Einsteckteils, die einen vorgegebenen Grenzwert überschreitet, sich die Rastverbindung selbsttätig löst. Im allgemeinen werden bei Fahrrädern mehrere Streben, vorzugsweise zwei Streben -Einfach- und Doppelstreben - verwendet, die am einen Ende an dem Radschützer angebracht sind und an ihrem anderen Ende in geeigneter Weise an Rahmenteilen des Fahrrads, zum Beispiel an der Vorderradgabel, wenn es sich um den Radschützer des Vorderrads handelt, befestigt werden. In der Regel findet diese Befestigung im unteren Endbereich der Vorderradgabel in der Nähe der Radnabe statt. Ähnliche Befestigungen sind entsprechend für die Streben vorgesehen, die den Radschützer des Hinterrads halten. Bei den herkömmlich befestigten Streben für Radschützer hat es sich als problematisch erwiesen, daß im Kollisionsfall die auftretenden Kräfte zu starker Deformierung des Radschützers selbst und der Streben, zur unkontrollierten Lösung der Streben aus ihrer Verankerung oder zum Bruch der Streben führen können. Da es sich bei den Streben für die Verankerung des Radschützers in der Regel um relativ dünne Drahtstreben handelt, stellt dies natürlich eine erhebliche Verletzungsgefahr dar. Ebenso ist es gefährlich, wenn bei der Fahrt zum Beispiel ein Stock zwischen Speichen und Streben des Radschützers gerät. Hier kann es zu folgenschweren Unfällen kommen.

Eine derartige Einrichtung zur Befestigung von Streben zur Halterung eines Radschützers am Rahmen eines Fahrrads ist bereits aus der DE 42 32 539 A1 bekannt. Hier wird ein Fahrrad mit abnehmbaren Schutzblechen beschrieben, wobei insbesondere Schnellverschlüsse zum Einsatz kommen, die eine schnelle Montage bzw. Demontage von Schutzblechen oder ähnlichen Anbauteilen zulassen. Bei den hier verwendeten Schnellverschlüssen handelt es sich um eine Kombination aus einem verriegelbaren Druckknopf und einem korrespondierenden Gegenstift. Als nachteilig in diesem Zusammenhang erweist sich jedoch, dass die Schnellverschlüsse nicht dazu geeignet sind, selbständig ab einer bestimmten voreingestellten Kraft auszulösen und somit einem Blockieren des Rades im Falle eines Sturzes oder durch einen Gegenstand entgegen zu wirken.

Eine weitere Schutzblechanordnung ist aus der EP 0 694 469 A1 bekannt. Hier wird eine Schutzblechanordnung mit einem an die Strebe unmittelbar angeformten Rastmittel sowie eine Rasteinrichtung als Gegenlager offenbart. Als nachteilig erweist sich jedoch, dass das Rastmittel durch die Form der miteinander verbundenen Streben selbst gebildet wird, nämlich durch eine Schlaufe oder Öse, welche durch Biegen eines Drahtes herstellbar ist. Eine Auslösung im Falle eines Notfalls ist hier ebenfalls nicht gewährleistet.

Die Aufgabe der vorliegenden Erfindung besteht somit darin, eine Einrichtung zur Befestigung von Streben zur Halterung eines Radschützers am Rahmen eines Fahrrads zu schaffen, bei der diese Verletzungsgefahr im Kollisions- oder Sturzfall und Unfallgefahr durch diese das Rad blockierenden Gegenstände vermindert wird.

Die Lösung dieser Aufgabe liefert eine erfindungsgemäße Einrichtung zur Befestigung von Streben der oben genannten Art, mit den kennzeichnenden Merkmalen des Hauptanspruchs. Die erfindungsgemäße Lösung beruht auf der Überlegung, daß ein kontrolliertes Lösen der Verbindung zwischen den Streben und dem Fahrradrahmen im Falle einer Kollision, einer Blockade oder eines Sturzes den Bruch der Strebe oder deren Lösen am mit dem Radschützer verbundenen Ende verhindert. Dabei ist erfindungsgemäß weiterhin vorgesehen, die den Fahrradrahmen zugewandten Enden der Streben in einer Aufnahme eines Anschlußteils einzubetten und die Verbindung zwischen diesem Anschlußteil und dem Fahrradrahmen lösbar auszugestalten, so daß nach Lösen der Verbindung das in die Aufnahme eingebettete Strebenende keine Verletzungsgefahr darstellt.

Erfindungsgemäß weist die Einrichtung zur Befestigung der Strebe wenigstens ein Anschlußteil auf, mit wenigstens einer Aufnahme für die Strebe sowie ein Einsteckteil, dessen eines Ende am Fahrradrahmen befestigbar ist, wobei das andere Ende des Einsteckteils in eine entsprechend geformte Aufnahme des Anschlußteils einsteckbar und mit diesem über eine Rastverbindung verbindbar ist und wobei die Rastverbindung so ausgebildet ist, daß bei Auftreten einer Zugkraft entgegen der Einsteckrichtung des Einsteckteils, die einen vorgegebenen Grenzwert überschreitet, sich diese Rastverbindung selbsttätig löst. Dabei kann der gewünschte Grenzwert der Zugkraft je nach Ausgestaltung der Rastverbindung variabel gewählt werden. Die Rastverbindung ist jedoch dabei so ausgebildet, daß sie bei gewöhnlicher Belastung, also während des Fahrens, eine dauerhafte und feste Verbindung zwischen Anschlußteil und Fahrradrahmen und somit eine gute Befestigung der Strebe am Fahrradrahmen darstellt. Nur wenn bei einem Unfall oder Sturz oder Blockade die entsprechenden Zugkräfte vom Radschützer her über die Streben auf das Anschlußteil ausgeübt werden, löst sich die Rastverbindung zwischen Anschlußteil und Einsteckteil, während das Einsteckteil am Fahrradrahmen befestigt bleibt.

Gemäß einer bevorzugten Weiterbildung der Erfindung kann die Aufnahme des Anschlußteils beispielsweise so ausbildet sein, daß sie zwei zueinander in spitzem Winkel also in V-förmiger Anordnung angeordnete Streben des Radschützers aufnimmt. Vorzugsweise sind dabei für die jeweiligen Enden der Streben jeweils Aufnahmen in dem Anschlußteil gebildet. Dabei kann man die beiden Enden der Streben auch miteinander verbinden, wobei dieser Verbindungsbereich in der Aufnahme des Anschlußteils liegt und ein gebogener Abschnitt der Strebe sein kann, der in die Aufnahmen des Anschlußteils eingebettet ist. In diesem Fall handelt es sich also um eine einzige Strebe mit zwei V-förmig vom Anschlußteil weg führenden und am anderen Ende am Radschützer befestigten Streben.

Die Aufnahme des Anschlußteils für das Einsteckteil kann beispielsweise in der Draufsicht im Umriß etwa rechteckig sein, und ein entsprechend geformter Steckfortsatz ist dann am Einsteckteil gebildet.

Um das Einstecken des Steckfortsatzes zu erleichtern und die Elastizität der Aufnahme des Anschlußteils zu erhöhen, kann man dieses Anschlußteil im Bereich der Aufnahme mit seitlichen Schlitzen versehen.

Der Steckfortsatz des Einsteckteils kann eine Schrägfläche aufweisen, die als sanft ansteigende Anlaufschräge ausgebildet ist und an der Rückseite ebenfalls eine. Schrägfläche aufweist, die etwas steiler ist.

Gemäß einer weiteren bevorzugten Ausbildung der Erfindung kann man das Anschlußteil so ausbilden, daß es ein mittleres Ringteil aufweist und von diesem Ringteil sich radial nach außen erstreckende Aufnahmen für die Strebe einerseits und zu diesen Aufnahmen der Streben eine in einem stumpfen Winkel sich erstreckende Aufnahme für den Steckfortsatz des Einsteckteils.

Die in den Unteransprüchen genannten Merkmale betreffen bevorzugte Weiterbildungen der erfindungsgemäßen Aufgabenlösung. Weitere Vorteile der erfindungsgemäßen Lösung ergeben sich aus der nachfolgenden Detailbeschreibung.

Im folgenden wird die vorliegende Erfindung anhand eines Ausführungsbeispiels unter Bezugnahme auf die beiliegenden Zeichnungen näher beschrieben. Dabei zeigen
- Fig. 1: eine schematisch vereinfachte Ansicht einer an einem Fahrradrahmen verankerten Sicherheitsstrebe;
- Fig. 2: eine Seitenansicht eines erfindungsgemäßen Anschlußteils für eine Sicherheitsstrebenbefestigung;
- Fig. 3: eine entsprechende Draufsicht auf dieses Anschlußteil;
- Fig. 4: eine Ansicht des Anschlußteils in Richtung des Pfeils IV von Fig. 2;
- Fig. 5: ein zusammengestecktes Anschlußteil im vertikalen Schnitt;
- Fig. 6: ein zusammengestecktes Anschlußteil im horizontalen Schnitt;
- Fig. 7: eine entsprechende Schnittdarstellung des Anschlußteils wie in Fig. 5, jedoch vor dem Zusammenstecken;
- Fig. 8: eine entsprechende Schnittdarstellung des Anschlußteils wie in Fig. 6, jedoch vor dem Zusammenstecken;
- Fig. 9: eine schematisch vereinfachte Ansicht einer an einem Fahrradrahmen verankerten Sicherheitsstrebe gemäß einer Variante der Erfindung;
- Fig. 10: eine Seitenansicht eines erfindungsgemäßen Anschlußteils für eine Sicherheitsstrebenbefestigung gemäß einer Variante der Erfindung;
- Fig. 11: eine entsprechende Draufsicht auf dieses Anschlußteil;
- Fig. 12: eine Ansicht des Anschlußteils in Richtung des Pfeils XII von Fig. 10;
- Fig. 13: ein zusammengestecktes Anschlußteil gemäß einer Variante der Erfindung im vertikalen Schnitt;
- Fig. 14: ein zusammengestecktes Anschlußteil gemäß der Variante von Fig. 13 im horizontalen Schnitt;
- Fig. 15: eine entsprechende Schnittdarstellung des Anschlußteils gemäß Fig. 13, jedoch vor dem Zusammenstecken;
- Fig. 16: eine entsprechende Schnittdarstellung des Anschlußteils wie in Fig. 14, jedoch vor dem Zusammenstecken.

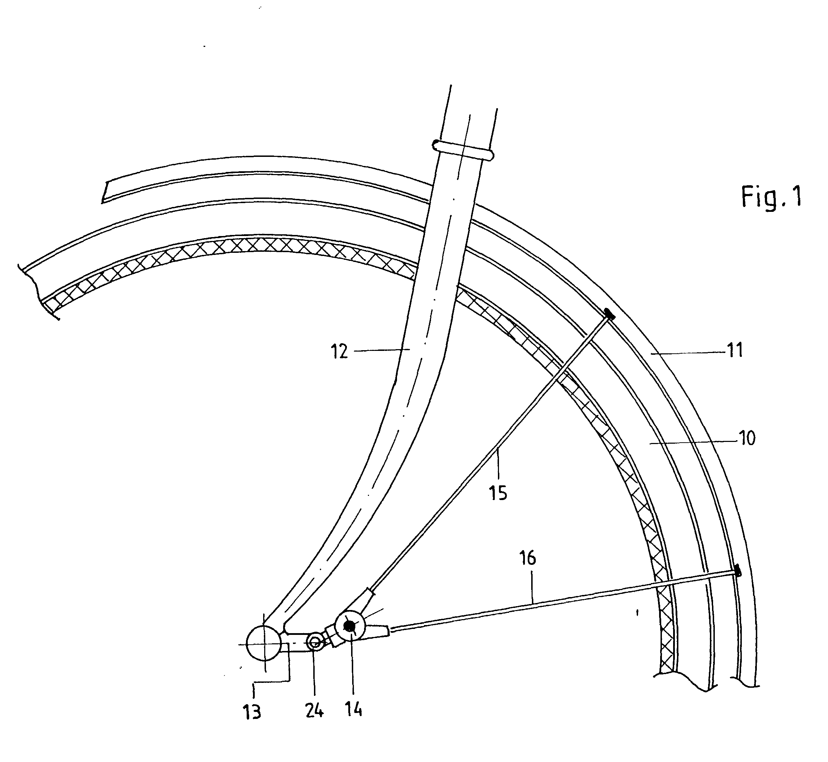

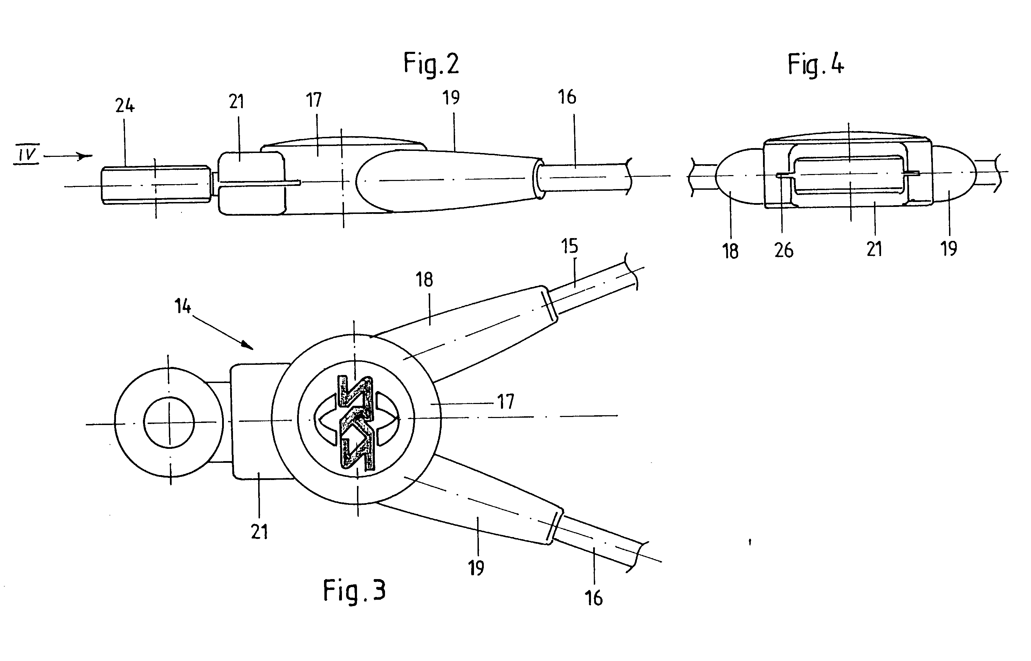

Zunächst wird auf Fig. 1 Bezug genommen. Die Darstellung zeigt in der Seitenansicht den vorderen Bereich eines Fahrrads mit Vorderrad 10 und Radschützer 11 sowie der Vorderradgabel 12, wobei hier nur die für die vorliegende Erfindung interessierenden Teile dargestellt sind. Von dem Vorderrad 10 ist ebenso wie von dem Radschützer 11 nur ein oberer Teilbereich dargestellt. Man erkennt, daß von der Vorderradgabel 12 ausgehend eine im spitzen Winkel zu dieser sich nach hinten also in Richtung auf das Hinterrad erstreckende Anformung 13 vorhanden ist, an deren freiem Ende das erfindungsgemäße Anschlußteil 14 für die Sicherheitsstrebenbefestigung befestigt ist. Wie man weiter erkennt sind zwei solcher Sicherheitsstreben 15, 16 vorhanden, die von entsprechenden Aufnahmen des Anschlußteils 14 aufgenommen werden und einen spitzen Winkel zueinander einnehmen und die sich von dem Anschlußteil und somit vom nabenseitigen Ende der Vorderradgabel 12 aus zu dem Radschützer 11 hin erstrecken und an dem Radschützer an ihrem anderen Ende angebracht sind. Das erfindungsgemäße Anschlußteil 14 für die Sicherheitsstrebenbefestigung an der Vorderradgabel 12 wird nun nachfolgend unter Bezugnahme auf die Fig. 2 bis 7 näher erläutert.

Fig. 3 zeigt das Anschlußteil 14 in der Draufsicht. Wie man sieht, besteht dieses aus einem im Umriß kreisförmigen Mittelstück 17, von dem aus sich radial nach außen hin zwei Aufnahmen 18, 19 erstrecken, die zumindest abschnittsweise etwa rohrförmig sind, um die Teilstücke 15, 16 des Strebendrahtes aufzunehmen, und die zueinander einen spitzen Winkel einschließen. Dieser spitze Winkel ist nicht unbedingt erforderlich, da es darauf ankommt, in welchem Winkelabstand zueinander die Befestigungspunkte der Sicherheitsstrebenenden am Radschützer 11 liegen.

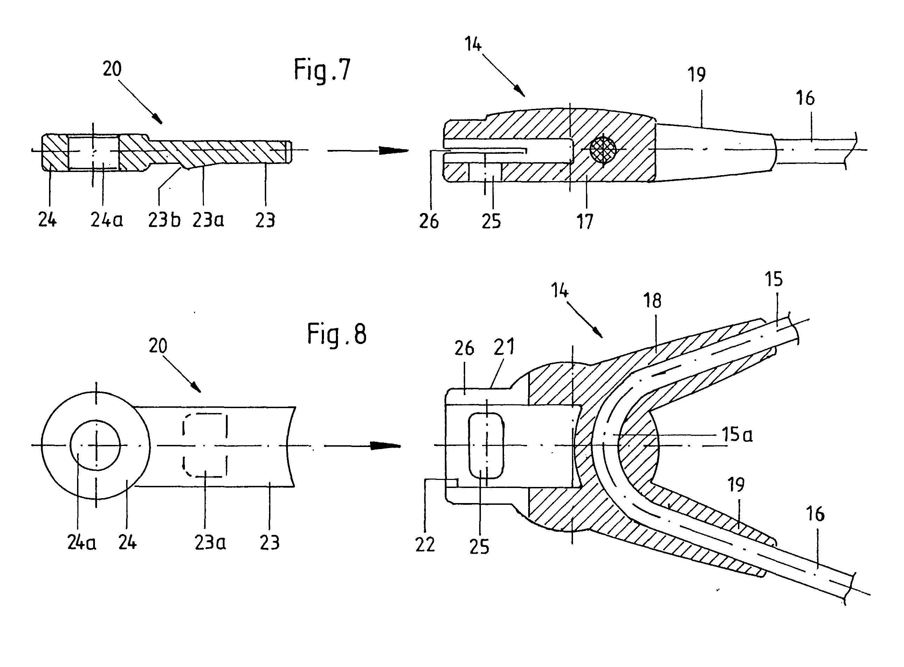

Wie man aus Fig. 8 erkennt, sind die beiden Enden der Sicherheitsstreben 15, 16 in dem Anschlußteil 14 zu einer dort gebogenen durchgehenden einzigen Sicherheitsstrebe verbunden, der gebogene Abschnitt der Sicherheitsstrebe ist mit 15a bezeichnet. Die Sicherheitsstrebe wird in dem Anschlußstück 14 allseitig umschlossen und eingefaßt.

Zu der zu den Sicherheitsstreben 15, 16 gegenüberliegenden Seite hin erstreckt sich von dem Mittelstück 17 aus eine Anformung 21 des Anschlußteils 14, wobei diese Anformung 21 jeweils einen stumpfen Winkel zu den Aufnahmen 18 und 19 einnimmt. Diese Anformung 21 hat, wie man aus Fig. 8 erkennt, innen eine flache, etwa quaderförmige Aufnahme 22, in die ein Steckfortsatz 23 eines Einsteckteils 20 einschiebbar ist. Die Einsteckrichtung des Steckfortsatzes 23 in die Aufnahme 22 des Anschlußteils 14 ist in Fig. 8 und Fig. 7 durch Pfeil gekennzeichnet.

Aus den Fig. 8 und 7 erkennt man weiterhin, daß das Einsteckteil 20 am anderen Ende ein am Steckfortsatz 23 angeformtes Ringteil 24 aufweist. Dieses Ringteil 24 kann man über eine Schraubverbindung an der Anformung 13 der Vorderradgabel 12 anschrauben, wie dies in Fig. 1 gezeigt ist. Dazu hat das Ringteil 24 eine konzentrische Mittelbohrung 24a, die eine Schraube oder auch ein anderes geeignetes Befestigungselement aufnimmt. Der Steckfortsatz 23 wird zur Verbindung des Einsteckteils 20 mit dem Anschlußteil 14 in die Aufnahme 22 eingesteckt, wobei sich dann eine Rastverbindung ergibt, die bis zu einer bestimmten vorgegebenen Belastungsgrenze fest und auf Zug belastbar ist. Erst wenn die Zugkraft, die über die Streben 15,16 einwirkt, Einsteckteil 20 und Anschlußteil 14 auseinander zieht und die Grenzbelastung überschritten wird, löst sich die Rastverbindung. Dies ist der Effekt der gewünschten Sicherheitsbefestigung der Sicherheitsstreben 15, 16, die vom Radschützer 11 kommen, an der Vorderradgabel 12 und somit am Rahmen des Fahrrads.

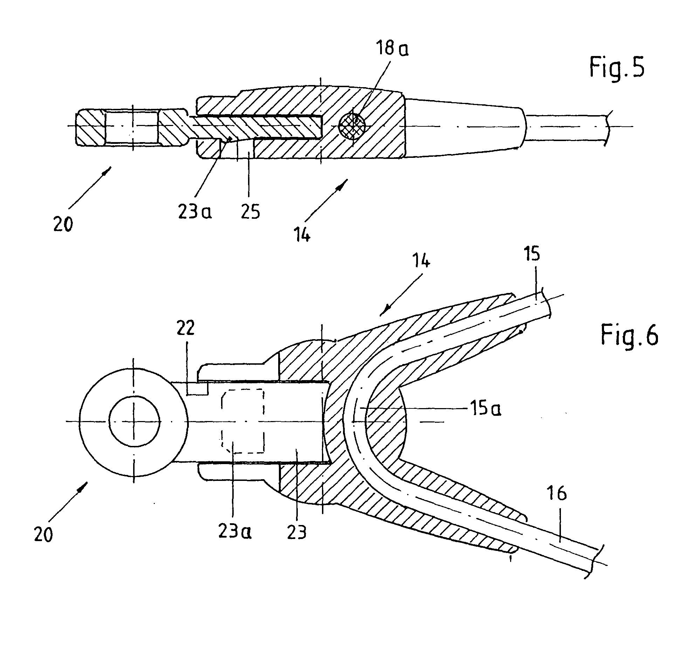

Der Aufbau der Rastverbindung ist aus den Fig. 7 und 8 erkennbar. Hierzu hat der Steckfortsatz 23 eine Rastnase 23a und das Anschlußteil 14 hat eine längliche Bohrung 25 an der Unterseite, die in die Aufnahme 22 mündet und in ihrer Breite der Breite der Rastnase 23a entspricht. Außerdem ist das Anschlußteil 14 im Bereich der Anformung 21 an beiden Seiten mit schmalen Schlitzen 26 versehen, die man sowohl in Fig. 7 als auch in Fig. 8 erkennen kann. Durch diese Schlitze 26 ergibt sich beim Einschieben des Einsteckteils 20 eine ausreichende Elastizität, so daß sich der Aufnahmeraum der Aufnahme 22 des Anschlußteils 14 nach oben bzw. unten hin auseinander drücken läßt und das Einsteckteil 20 mit seinem Steckfortsatz 23 so weit einschiebbar ist, bis die Rastnase 23 in die längliche Bohrung 25 einrastet und eine ausreichend feste (bis zur Grenzbelastung) Rastverbindung entsteht. Dieser eingerastete Zustand ist in den Fig. 5 und 6 dargestellt.

Wenn nun eine Zugkraft auftritt, die größer ist als ein vorgegebener Grenzwert, zum Beispiel wenn der Radfahrer in einen Unfall verwickelt wird oder stürzt oder der Radschützer (Schutzblech) durch einen Gegenstand in Drehrichtung mitgerissen wird, dann ist das Herausziehen des Steckfortsatzes 23 aus der Aufnahme 22 des Anschlußteils 14 deshalb möglich, weil wie man aus Fig. 7 erkennen kann, die Rastnase 23a an ihrer der Einschubseite gegenüberliegenden Seite (also rückseitig) eine Schrägfläche 23b aufweist. Die Rastnase 23a wirkt also nicht wie ein sägezahnartiger Widerhaken, sondern läßt bei Auftreten einer höheren Zugkraft ein Aufspreizen der Oberdecke und der Unterwand der Aufnahme 22 zu, so daß sich die Rastnase 23a aus der länglichen Bohrung 25 löst. Durch die Schlitze 26 wird es möglich, eine definierte nicht zu hohe Lösekraft zu erreichen.

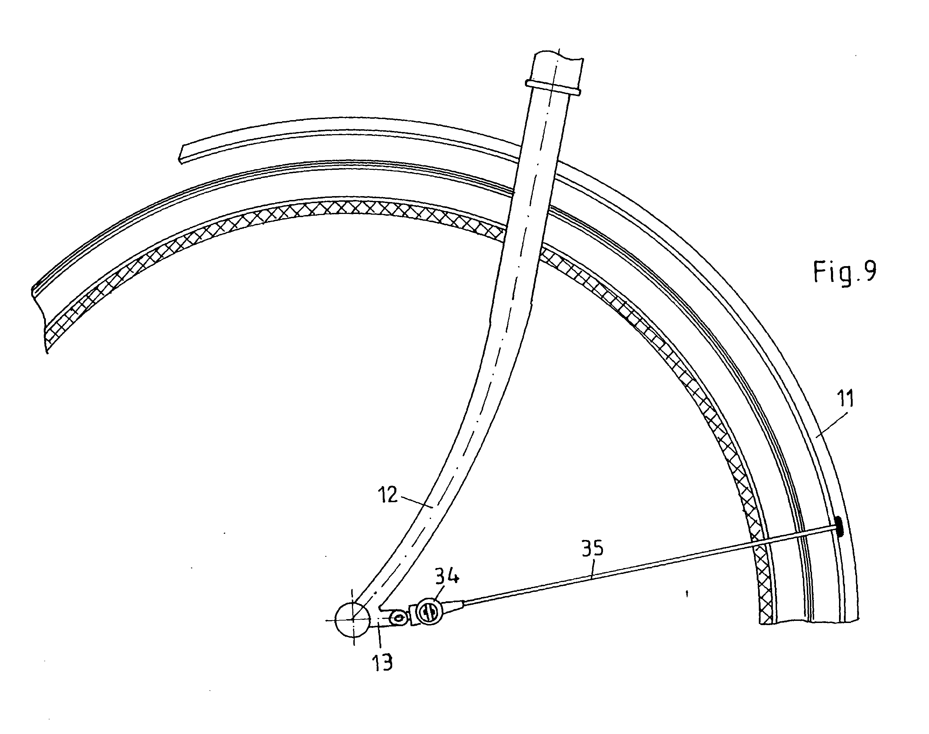

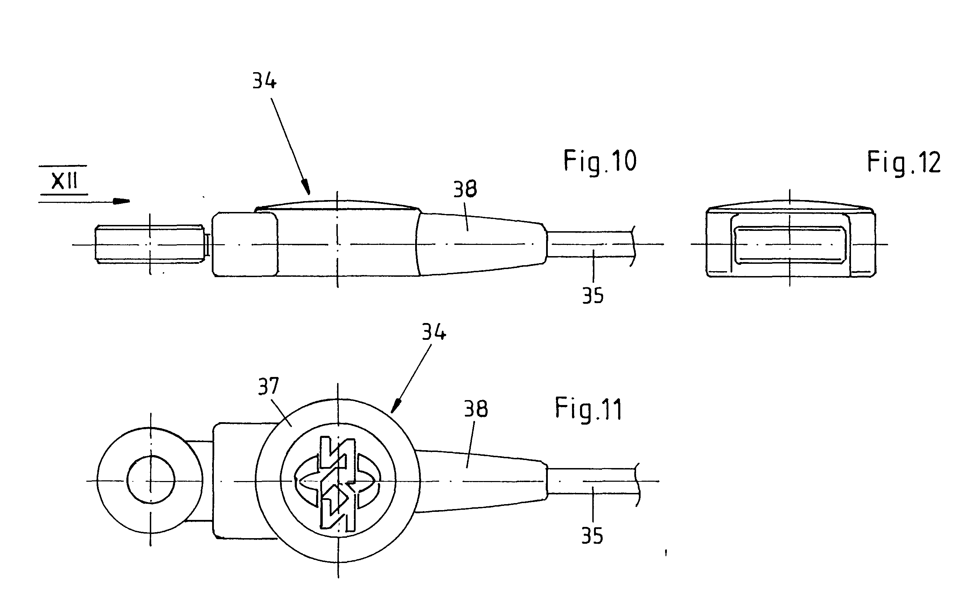

Nachfolgend wird auf Fig. 9 Bezug genommen. Die Darstellung zeigt eine Ansicht einer an einem Fahrradrahmen verankerten Sicherheitsstrebe gemäß einer Variante der Erfindung. Man erkennt, daß von der Vorderradgabel 12 ausgehend eine im spitzen Winkel zu dieser sich nach hinten in Richtung auf das Hinterrad erstreckende Anformung 13 vorhanden ist, an deren freiem Ende das erfindungsgemäße Anschlußteil 34 für die Sicherheitsstrebenbefestigung befestigt ist. Hier ist nur eine solche Sicherheitsstrebe 35 vorhanden, die von einer entsprechenden Aufnahme des Anschlußteils 34 aufgenommen wird und die sich von dem Anschlußteil 34 und somit vom nabenseitigen Ende der Vorderradgabel 12 aus zu dem Radschützer 11 hin erstreckt und an dem Radschützer an ihrem anderen Ende angebracht ist. Das erfindungsgemäße Anschlußteil 34 für die Sicherheitsstrebenbefestigung an der Vorderradgabel 12 wird nun nachfolgend unter Bezugnahme auf die Figuren 10 bis 16 näher erläutert.

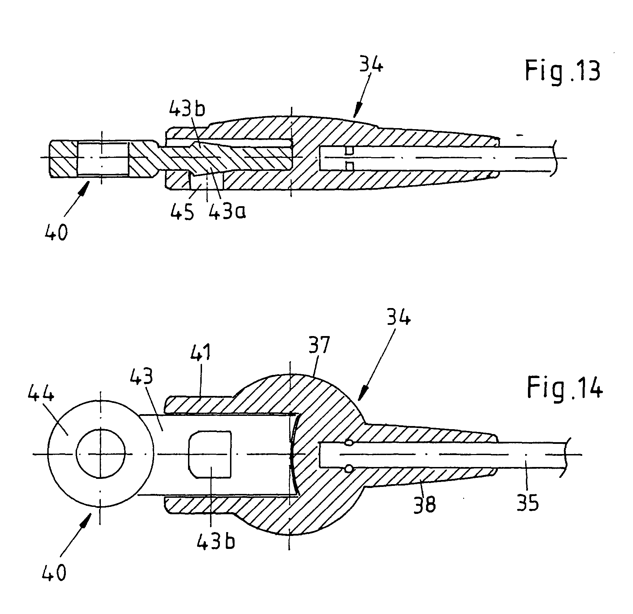

Fig. 11 zeigt das Anschlußteil 34 in der Draufsicht. Wie man sieht, besteht dieses aus einem im Umriß kreisförmigen Mittelstück 37, von dem aus sich radial nach außen hin eine Aufnahme 38 erstreckt, die zumindest abschnittsweise etwa rohrförmig ist, um den Strebendraht 35 der Sicherheitsstrebe aufzunehmen.

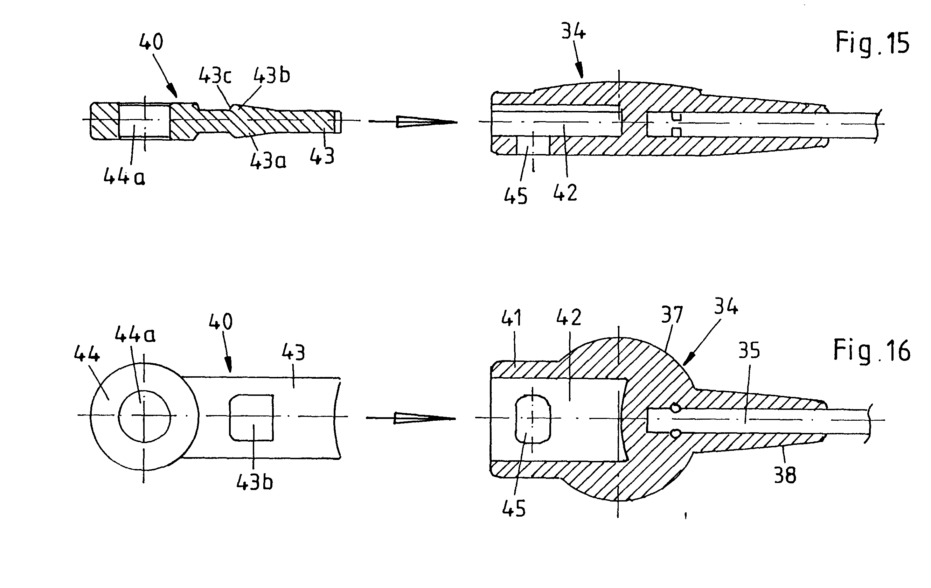

Wie man aus Fig. 16 erkennt, ist das Ende der Sicherheitsstrebe 35 in dem Anschlußteil 34 allseitig umschlossen und eingefaßt.

Zu der zu der Sicherheitsstrebe 35 gegenüberliegenden Seite hin erstreckt sich von dem Mittelstück 37 aus eine Anformung 41 des Anschlußteils 34, wobei diese Anformung 41 etwa einen 180°-Winkel zu der Aufnahme 38 einnimmt. Die Anformung 41 hat, wie man aus Fig. 16 erkennt, innen eine flache etwa quaderförmige Aufnahme 42, in die ein Steckfortsatz 43 eines Einsteckteils 40 einschiebbar ist. Die Einsteckrichtung des Steckfortsatzes 43 in die Aufnahme 42 des Anschlußteils 34 ist in den Figuren 15 und 16 durch Pfeil gekennzeichnet.

Aus den Figuren 15 und 16 erkennt man weiterhin, daß das Einsteckteil 40 am anderen Ende ein am Steckfortsatz 43 angeformtes Ringteil 44 aufweist. Dieses Ringteil 44 kann man über eine Schraubverbindung oder dergleichen an der Anformung 13 der Vorderradgabel 12 anschrauben, wie dies in Fig. 9 gezeigt ist. Dazu hat das Ringteil 44 eine konzentrische Mittelbohrung 44a, die eine Schraube oder auch ein anderes geeignetes Befestigungselement aufnimmt. Der Steckfortsatz 43 wird zur Verbindung des Einsteckteils 40 mit dem Anschlußteil 34 in die Aufnahme 42 eingesteckt, wobei sich dann eine Rastverbindung ergibt, die bis zu einer bestimmten vorgegebenen Belastungsgrenze fest und auf Zug belastbar ist. Erst wenn die Zugkraft, die über die Strebe 35 einwirkt, Einsteckteil 40 und Anschlußteil 34 auseinanderzieht und die Grenzbelastung überschritten wird, löst sich die Rastverbindung. Dies ist der Effekt der gewünschten Sicherheitsbefestigung der Sicherheitsstrebe 35, die vom Radschützer 11 kommt, an der Vorderradgabel 12 und somit am Rahmen des Fahrrads.

Der Aufbau der Rastverbindung ist aus den Figuren 15 und 16 erkennbar. Hierzu hat der Steckfortsatz 43 eine Rastnase 43a und das Anschlußteil 34 hat eine längliche Bohrung 45 an der Unterseite, die in die Aufnahme 42 mündet und in ihrer Breite etwa der Breite der Rastnase 43a entspricht. Wie man aus Fig. 15 weiter erkennt, ist hier auf der Oberseite eine entsprechende Rastnase 43b vorhanden. Die Aufnahme 42 des Anschlußteils 34 hat eine ausreichende Elastizität, so daß sich der Aufnahmeraum beim Einschieben des Einsteckteils 40 weit genug auseinanderdrücken läßt und das Einsteckteil 40 mit seinem Steckfortsatz 43 so weit einschiebbar ist, bis die untere Rastnase 43a in die längliche Bohrung 45 einrastet und eine ausreichend feste (bis zur Grenzbelastung) Rastverbindung entsteht. Dieser eingerastete Zustand ist in den Figuren 13 und 14 dargestellt.

Wenn nun eine Zugkraft auftritt, die größer ist als ein vorgegebener Grenzwert, z.B. wenn der Radfahrer in einen Unfall verwickelt wird oder stürzt oder der Radschützer (Schutzblech) durch einen Gegenstand in Drehrichtung mitgerissen wird, dann ist das Herausziehen des Steckfortsatzes 43 aus der Aufnahme 42 des Anschlußteils 34 deshalb möglich, weil, wie man aus Fig. 15 erkennen kann, die Rastnasen 43a, 43b an ihrer der Einschubseite gegenüberliegenden Seite (also rückseitig) eine Schrägfläche 43c aufweisen. Die Rastnase 43a wirkt also nicht wie ein sägezahnartiger Widerhaken, sondern läßt bei Auftreten einer höheren Zugkraft ein Aufspreizen der Oberdecke und der Unterwand der Aufnahme 42 zu, so daß sich die Rastnase 43a aus der länglichen Bohrung 45 lösen kann. Je nach Höhe der Rastnasen 43a, 43b und dem Höhenmaß der Aufnahme 42 kann man eine gewünschte definierte Lösekraft des Steckfortsatzes 43 aus seiner Aufnahme 42 erzeugen.

## Patentansprüche

1. Einrichtung zur Befestigung von Streben zur Halterung eines Radschützers am Rahmen eines Fahrrads, wobei diese wenigstens ein Anschlußteil (14) umfaßt, mit wenigstens einer Aufnahme (18, 19) für die Strebe (15, 16) sowie ein Einsteckteil (20), dessen eines Ende am Fahrradrahmen befestigbar ist, wobei das andere Ende des Einsteckteils in eine entsprechend geformte Aufnahme (22) des Anschlußteils (14) einsteckbar und mit diesem über eine Rastverbindung verbindbar ist, wobei die Rastverbindung so ausgebildet ist, daß bei Auftreten einer Zugkraft entgegen der Einsteckrichtung des Einsteckteils (20), die einen vorgegebenen Grenzwert überschreitet, sich die Rastverbindung selbsttätig löst, **dadurch gekennzeichnet, daß** die Aufnahme (22) des Anschlußteils (14) für das Einsteckteil (20) in der Draufsicht einen etwa rechteckigen Umriß aufweist und das Einsteckteil (20) einen entsprechend passend geformten Steckfortsatz (23) aufweist und daß von der Aufnahme (22) des Anschlußteils (14) aus nach unten oder oben sich eine Bohrung (25) erstreckt und am Steckfortsatz (23) des Einsteckteils (20) eine Rastnase (23a) gebildet ist, die in diese Bohrung (25) einrastbar ist.

2. Einrichtung zur Befestigung von Streben zur Halterung eines Radschützers nach Anspruch 1, **dadurch gekennzeichnet, daß** das Anschlußteil (14) je eine Aufnahme (18, 19) für zwei in einem spitzen Winkel zueinander angeordnete Streben (15, 16) aufweist, die an ihrem anderen Ende mit dem Radschützer (11) verbunden sind.

3. Einrichtung zur Befestigung von Streben zur Halterung eines Radschützers nach Anspruch 2, **dadurch gekennzeichnet, daß** die beiden Streben (15, 16) in der Aufnahme des Anschlußteils (14) über einen gebogenen Abschnitt (15a) zu einer einzigen Strebe verbunden sind.

4. Einrichtung zur Befestigung von Streben zur Halterung eines Radschützers nach einem der Ansprüche 1 bis 3, **dadurch gekennzeichnet, daß** die Aufnahme (22) des Anschlußteils (14) seitliche sich in Längsrichtung erstreckende relativ schmale und am Ende offene Schlitze (26) aufweist.

5. Einrichtung zur Befestigung von Streben zur Halterung eines Radschützers nach einem der Ansprüche 1 bis 4, **dadurch gekennzeichnet, daß** die Rastnase (23a) des Steckfortsatzes (23) einsteckseitig eine allmählich ansteigende Auflaufschräge aufweist und rückseitig dieser Auflaufschräge eine kürzere steilere Schrägfläche (23b) gebildet ist, die in die Bohrung (25) des Anschlußteils (14) einrastbar ist.

6. Einrichtung zur Befestigung von Streben zur Halterung eines Radschützers nach einem der Ansprüche 1 bis 5, **dadurch gekennzeichnet, daß** das Einsteckteil (20) an der dem Steckfortsatz (23) gegenüberliegenden Seite ein Ringteil (24) mit einer konzentrischen Mittelbohrung (24a) aufweist zur Aufnahme eines Befestigungselements zur Befestigung des in das Anschlußteil (14) eingesteckten Einsteckteils (20) an einer Strebe (13) des Rahmens.

7. Einrichtung zur Befestigung von Streben zur Halterung eines Radschützers nach einem der Ansprüche 2 bis 6, **dadurch gekennzeichnet, daß** sich das Einsteckteil (20), wenn es eingesteckt ist, in einem stumpfen Winkel zu den beiden die Streben (15, 16) aufnehmenden Aufnahmen (18, 19) des Anschlußteils (14) erstreckt.

8. Einrichtung zur Befestigung von Streben zur Halterung eines Radschützers nach einem der Ansprüche 2 bis 7, **dadurch gekennzeichnet, daß** das Anschlußteil (14) ein im Umriß in der Grundform etwa kreisförmiges Mittelstück (17) aufweist von dem aus sich die beiden Aufnahmen (18, 19) für die Streben (15, 16) und die Aufnahme (22) für das Einsteckteil (20) jeweils radial nach außen hin erstrecken.

## Claims

1. Device for the attachment of struts to hold a mudguard on the frame of a bicycle, comprising at least one connection element (14) with at least one mounting (18, 19) for the struts (15, 16) and an insertion element (20), one end of which can be attached to the bicycle frame while the other end of the insertion element can be inserted into a correspondingly shaped mounting (22) in the connection element (14) and can be fixed therein by means of a detent joint, the detent joint being designed such that if a tensile force is applied in the direction opposite to the insertion direction of the insertion element (20) and the said force exceeds a predetermined limit value, the detent joint is automatically released,
**characterised in that**
the mounting (22) in the connection element (14) for the insertion element (20), seen in plan view, has an approximately rectangular outline and the insertion element (20) has a corresponding, appropriately shaped insertion tab (23), and from the mounting (22) of the connection element (14) a bore (25) extends outwards and downwards or upwards, and on the insertion tab (23) of the insertion element (20) a detent (23a) is formed, which can engage in the said bore (25).

2. Device for the attachment of struts to hold a mudguard according to Claim 1,
**characterised in that**
the connection element (14) has mountings (18, 19) respectively for the struts (15, 16) arranged at an acute angle relative to one another, the said struts being attached to the mudguard (11) at their other ends.

3. Device for the attachment of struts to hold a mudguard according to Claim 2,
**characterised in that**
within the mounting of the connection element (14), the two struts (15, 16) are joined to form a single strut via a bent section (15a).

4. Device for the attachment of struts to hold a mudguard according to any of Claims 1 to 3,
**characterised in that**
at the sides, the mounting (22) in the connection element (14) has relatively narrow slits (26) open at the end, which extend in the longitudinal direction.

5. Device for the attachment of struts to hold a mudguard according to any of Claims 1 to 4,
**characterised in that**
on its insertion side, the detent (23a) of the insertion tab (23) has a gradually rising contact ramp and, behind this ramp, a shorter and steeper inclined surface (23b) is formed, which can engage with the bore (25) in the connection element (14).

6. Device for the attachment of struts to hold a mudguard according to any of Claims 1 to 5,
**characterised in that**
on the side opposite the insertion tab (23), the insertion element (20) has an annular component (24) with a concentric central bore (24a) to receive an attachment element for fixing the insertion element (20) inserted into the connection element (14) to a strut (13) of the bicycle frame.

7. Device for the attachment of struts to hold a mudguard according to any of Claims 2 to 6,
**characterised in that**
when it is inserted, the insertion element (20) extends at an obtuse angle relative to the two mountings (18, 19) of the connection element (14) that receive the struts (15, 16).

8. Device for the attachment of struts to hold a mudguard according to any of Claims 2 to 7,
**characterised in that**
the connection element (14) has a central portion (17) the basic shape of whose outline is approximately circular, from which the two mountings (18, 19) for the struts (15, 16) and the mounting (22) for the insertion element (20) each extend radially outwards.

## Revendications

1. Dispositif de fixation d'entretoises pour maintien d'un garde-boue sur le cadre d'une bicyclette, comprenant au moins un élément de connexion (14) avec au moins un montant (18, 19) destiné aux entretoises (15, 16) et un élément d'insertion (20), dont une extrémité peut être fixée au cadre de bicyclette tandis que l'autre extrémité de l'élément d'insertion peut être introduit dans un montant conformé correspondant (22) dans l'élément de connexion (14) et peut y être fixé à l'aide d'un joint d'arrêt, le joint d'arrêt étant conçu de telle façon que si une force de traction est appliquée dans le sens opposé à la direction d'introduction de l'élément d'insertion (20) et si ladite force dépasse une valeur limite déterminée, le joint d'arrêt est relâché automatiquement,
**caractérisé en ce que**
le montant (22) dans l'élément de connexion (14) destiné à l'élément d'insertion (20), en vue plane, présente un contour plus ou moins rectangulaire et que l'élément d'insertion (20) présente une patte d'introduction correspondante conformée en conséquence (23), et partant du montant (22) de l'élément de connexion (14) un alésage (25) s'étend vers l'extérieur et vers le bas ou vers le haut, et sur la patte d'introduction (23) de l'élément d'insertion (20) un cliquet (23a) est formé, susceptible de s'enclencher dans ledit alésage (25).

2. Dispositif de fixation d'entretoises pour maintien d'un garde-boue selon la revendication 1,
**caractérisé en ce que**
l'élément de connexion (14) présente des montants (18, 19) respectivement pour les entretoises (15, 16) décrivant un angle aigu l'un par rapport à l'autre, lesdites entretoises étant fixées au garde-boue (11) en leurs autres extrémités.

3. Dispositif de fixation d'entretoises pour maintien d'un garde-boue selon la revendication 2,
**caractérisé en ce que**
à l'intérieur du montant de l'élément de connexion (14), les deux entretoises (15, 16) sont jointes pour former une simple entretoise par l'intermédiaire d'une section courbée (15a).

4. Dispositif de fixation d'entretoises pour maintien d'un garde-boue selon l'une quelconque des revendications 1 à 3,
**caractérisé en ce que**
au niveau des côtés, le montant (22) dans l'élément de connexion (14) présent des fentes relativement étroites (26) ouvertes à l'extrémité, qui s'étendent dans l'axe longitudinal.

5. Dispositif de fixation d'entretoises pour maintien d'un garde-boue selon l'une quelconque des revendications 1 à 4,
**caractérisé en ce que**
sur son côté insertion, le cliquet (23a) de la patte d'introduction (23) présente une rampe de contact remontant progressivement et, derrière cette rampe, une surface inclinée plus courte et plus abrupte (23b) est formée, susceptible de s'enclencher dans l'alésage (25) dans l'élément de connexion (14).

6. Dispositif de fixation d'entretoises pour maintien d'un garde-boue selon l'une quelconque des revendications 1 à 5,
**caractérisé en ce que**
sur le côté opposé à la patte d'introduction (23), l'élément d'insertion (20) présente un composant annulaire (24) avec un alésage central concentrique (24a) pour recevoir un élément de fixation servant à la fixation de l'élément d'insertion (20) introduit dans l'élément de connexion (14) contre une entretoise (13) du cadre de la bicyclette.

7. Dispositif de fixation d'entretoises pour maintien d'un garde-boue selon l'une quelconque des revendications 2 à 6,
**caractérisé en ce que**
une fois introduit, l'élément d'insertion (20) s'étend à un angle grave par rapport aux deux montants (18, 19) de l'élément de connexion (14) qui recevoir les entretoises (15, 16).

8. Dispositif de fixation d'entretoises pour maintien d'un garde-boue selon l'une quelconque des revendications 2 à 7,
**caractérisé en ce que**
l'élément de connexion (14) présente une portion centrale (17) dont la forme de base du contour est plus ou moins circulaire, d'où s'étendent radialement vers l'extérieur les deux montants (18, 19) destinés aux entretoises (15, 16) et le montant (22) destiné à l'élément d'insertion (20).
